# EUROPÄISCHE PATENTSCHRIFT

(11) **EP 2 188 106 B1**
(45) Veröffentlichungstag und Bekanntmachung des Hinweises auf die Patenterteilung: **17.08.2011**
(21) Anmeldenummer: 08761049.9
(22) Anmeldetag: 16.06.2008
(51) Int. Cl.: B29C 47/88

(54) **VERFAHREN UND VORRICHTUNG ZUR ENERGIEEINSPARUNG IN DER EXTRUSION**
METHOD AND DEVICE FOR SAVING ENERGY IN EXTRUSION
PROCÉDÉ ET DISPOSITIF POUR ÉCONOMISER DE L'ÉNERGIE LORS D'OPÉRATIONS D'EXTRUSION

(30) Priorität: 23.08.2007 DE 102007039799
(43) Veröffentlichungstag der Anmeldung: 26.05.2010
(73) Patentinhaber: battenfeld-cincinnati Austria GmbH, 1230 Wien (AT)
(72) Erfinder: HACKL, Leopold, A-3434 Katzelsdorf (AT)
(86) Internationale Anmeldenummer: PCT/EP2008/057532
(87) Internationale Veröffentlichungsnummer: WO 2009/024368

(56) Entgegenhaltungen:
- EP-A- 1 308 261
- DE-A1- 3 037 441
- DE-A1- 3 815 298
- US-A1- 2006 288 699
- DATABASE WPI Week 200062 Thomson Scientific, London, GB; AN 2000-642067 XP002500679 & JP 2000 246786 A (NOK MEGULASTIK CO LTD) 12. September 2000 (2000-09-12)
- SONNTAG R: "RATIONELLE WAERMERUECKGEWINNUNG AN KUNSTSTOFF-VERARBEITUNGSMASCHINEN" 1. September 1984 (1984-09-01), KUNSTSTOFFE, CARL HANSER VERLAG, MUNCHEN, DE, PAGE(S) 496 - 498 , XP001172756 ISSN: 0023-5563

## Beschreibung

Die Erfindung betrifft ein Verfahren zur Energieeinsparung in einer Extrusionslinie, die mindestens einen Extruder, ein Extrusionswerkzeug, eine Kühlstrecke und einen Abzug umfasst, wobei zur Erzeugung eines Profils mindestens in den Extruder zur Plastifizierung Energie in Form von Wärme in einen Kunststoff eingebracht wird, und nach einem Formgebungsprozess dem Profil mindestens in der Kühlstrecke zum Erreichen der Formstabilität diesem die Wärme wieder entzogen wird.

Weiterhin betrifft die Erfindung eine diesbezügliche Vorrichtung.

In der Kunststoffverarbeitung ist es bekannt, den Kunststoff durch Einsatz von Primärenergie (elektrischer Strom, Erdgas, ...) und Umwandlung dieser Energie in Reibungs- bzw. Heizungswärme aufzuschmelzen. Der so geschmolzene Kunststoff wird in eine Form gepresst (Spritzguss) oder, wie bei Extrusion, durch ein Werkzeug gepresst und anschließend zur Erreichung der Formstabilität intensiv gekühlt. Man spricht hier vom Einfrieren des Kunststoffes. Bei dieser intensiven Kühlung entsteht Abwärme, z.B. heiße Luft bei der Blasfolienextrusion, warmes Wasser in der Rohrextrusion oder auch beim Spritzgießen. Diese Abwärme wird bisher kaum genutzt. Sie wird über Chiller oder Kühltürme an die Umwelt abgeführt und ist somit verloren.

Zum Transport der Kühlmedien wie Luft und Wasser werden Ventilatoren bzw. Gebläse und Umwälzpumpen eingesetzt. Diese Gebläse und Umwälzpumpen werden über einen Elektromotor angetrieben. In einer Rohrfabrik gibt es üblicherweise einen geschlossenen Wasser-KühlKreislauf, über den das Wasser mittels einer Pumpe zu den einzelnen Verbrauchern wie Kühlbädern, Getriebekühlung etc. gebracht wird. Die Kühlbäder haben eine eigene Umwälzpumpe, die das Wasser immer wieder zum abzukühlenden Kunststoffprodukt bringt. Über ein Thermostat wird die Wassertemperatur konstant gehalten. Weitere mit Elektromotoren angetriebene Verbraucher sind z.B. Vakuumpumpen. In der Profilextrusion sind in einer Linie mehrere Vakuumpumpen installiert.

Aus dem Stand der Technik sind Dokumente wie die DE-A 30 37 441, die DE-A-308 15 298 oder die US-A-2006 288 699 bekannt. Die DE-A 30 37 441 beschreibt die Nutzung der Verlustwärme zum Vor~ wärmen des Aufzugebenden Materials, die DE-A-30815 298 offenbart die Herstellung von hochexakten Kunststoffprofilen bei möglichst hoher Produktionsgeschwindigkeit und die US-A--2006 288 699 beschreibt die Verwendung eines Stirlingmotors zur Energierückgewinnung.

**Aufgabe** der Erfindung ist es, ein Verfahren respektive eine Vorrichtung anzubieten, mittels dem bzw. der dem erzeugten Kunststoffprodukt entzogene Wärme im Prozess gewinnbringend genutzt und somit die gesamte Anlage energiesparend betrieben werden kann. Eine globale Umwelterwärmung wird somit minimiert.

Die Lösung der verfahrenstechnischen Aufgabe ist in Verbindung mit dem Oberbegriff des Anspruches 1 dadurch gekennzeichnet, dass mindestens ein Teil der entzogenen Wärme in mechanische Energie umgewandelt und dem Extrusionsprozess wieder zugeführt wird, wobei die mindestens in der Kühlstrecke entzogenen Wärme über einen Wasserkreislauf einer Wärmekraftmaschine zugeführt wird und die Wärme~ kraftmaschine eine Pumpe antreibt.

Weiterbildungsgemäß ist vorgesehen, dass die gewonnene mechanische Energie zum Betreiben der im Extrusionsprozess eingebundenen Geräte wie beispielsweise die Umwälzpumpen und/oder Ventilatoren und/oder Gebläse, aber auch die Vakuumpumpen genutzt wird.

Alternativ ist vorgesehen, die mechanische Energie in elektrische Energie umzuwandeln und in das Netz des Energieversorgers zurückzuspeisen. Denkbar ist es auch, mindestens einen Teil der elektrischen Energie im eigenen Werk zu nutzen. Es wird hier an das Betreiben kleiner Energieverbraucher wie Notbeleuchtungen etc. gedacht. Das Speichern der Energie in Akkumulatoren ist genauso möglich.

Die Lösung bezüglich der Vorrichtung ist in Verbindung mit dem Oberbegriff des Anspruches 5 dadurch gekennzeichnet, dass mindestens der Kühlstrecke eine Wärmekraftmaschine zugeordnet ist, mittels der dem Prozess entzogene Wärmemenge in mechanische Energie umwandelbar ist und die Wärmekraftmaschine mindestes eine Pumpe antreibt.

Weiterbildungsgemäß wird hier vorgeschlagen, dass als Wärmekraftmaschine ein Stirlingmotor eingesetzt wird, der wenigstens eine im Extrusionsprozess eingebundene Maschine wie Umwälzpumpen und/oder Ventilatoren und/oder Gebläse und/oder Vakuumpumpen umfasst.

Mit dem erfindungsgemäß vorgeschlagenen Verfahren bzw. Vorrichtung wird erstmalig in der Extrusion, sprich auch in der Kunststoffverarbeitung, ein Energiekreislauf vorgeschlagen, mittels dem zur Aufschmelzung des Kunststoffgranulates eingebrachte Energie mindestens teilweise wieder dem Prozess zugeführt wird.

In den Zeichnungen ist schematisch ein Ausführungsbeispiel der Erfindung wiedergegeben. Es zeigt
- Fig. 1: den Stand der Technik,
- Fig. 2: ein Anlagenschema bei vorhandenem ausreichen- dem Warmwasservorrat und
- Fig. 3: ein Anlagenschema ohne Warmwasservorrat.

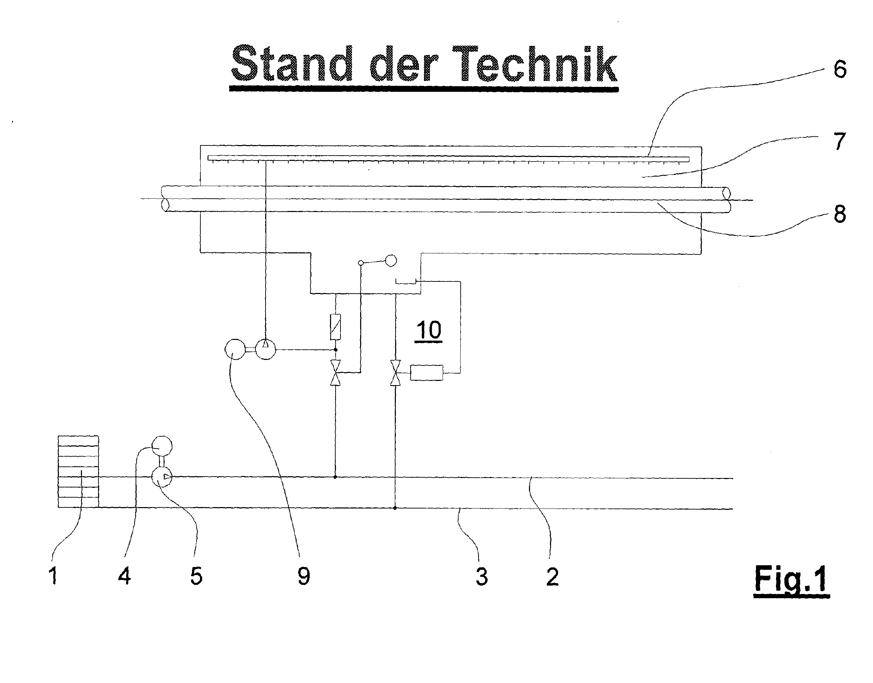

In Figur 1 wird schematisch ein System dargestellt, wie es heute üblicherweise in Extrusionshallen vorrätig ist. Der untere Teil der Figur zeigt eine übliche Halleninstallation, bei der ein Kühlturm 1 mit einem Vorlauf 2 und einem Rücklauf 3 verbunden ist. Ein erster Elektromotor 4 betätigt eine Pumpe 5, die das Wasser über entsprechende Versorgungsleitungen mit jeder Extrusionsanlage verbindet. Ein derartiges Schema ist im oberen Teil der Figur 1 dargestellt. Die Versorgungsleitung des Vorlaufes der Halleninstallation ist mit einem Verteilerrohr mit Sprühdüsen 6 verbunden, über die in einem Kühlbad 7 das Wasser zur Kühlung des Kunststoffrohres 8 geleitet wird. Für die nötige Förderung des Kühlwassers ist die Umwälzpumpe mit Elektromotor 9 zuständig. Ein entsprechendes Thermostatventil 10 regelt die Temperatur des im Kreislauf befindlichen Wassers. Wird beispielsweise eine Zieltemperatur überschritten, so wird Wasser aus dem Sammelbecken in den Hallenrücklauf gefördert und analog aus dem Hallenvorlauf wieder frisches, kälteres Wasser in den Kreislauf gebracht.

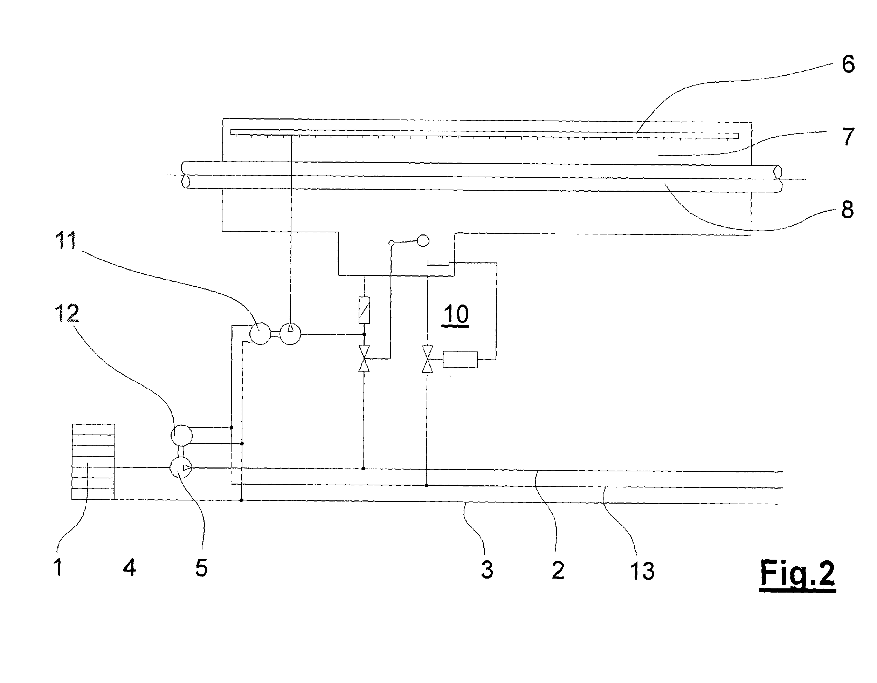

Figur 2 zeigt nun den erfindungsgemäßen Aufbau, bei dem wiederum die Rohrkühlung mit dem Verteilerrohr mit Sprühdüsen 6 und dem Kunststoffrohr 8 zum Einsatz kommt. Sie entspricht im Wesentlichen dem Aufbau der Figur 1. Der entscheidende Unterschied liegt jedoch darin, dass das über die Thermostat-Regelung abfließende warme Wasser den Warmwasserkreislauf 13 speist (nicht in die Rücklaufleitung 3 fließt) und dass die eingesetzten Elektromotore 5 und 9 nun durch Wärmekraftmaschinen 11 und 12 ersetzt wurden. Diese beiden Wärmekraftmaschinen treiben die jeweiligen Pumpen an und stehen mit dem Hallenrücklauf 3 und einer weiteren Warmwasserkreislaufleitung 13 in Verbindung und nutzen so das Temperaturgefälle zwischen diesen beiden Leitungssystemen aus, deren Energiegewinnung dafür ausreicht, mindestens die im Kreislauf befindlichen Pumpen anzutreiben.

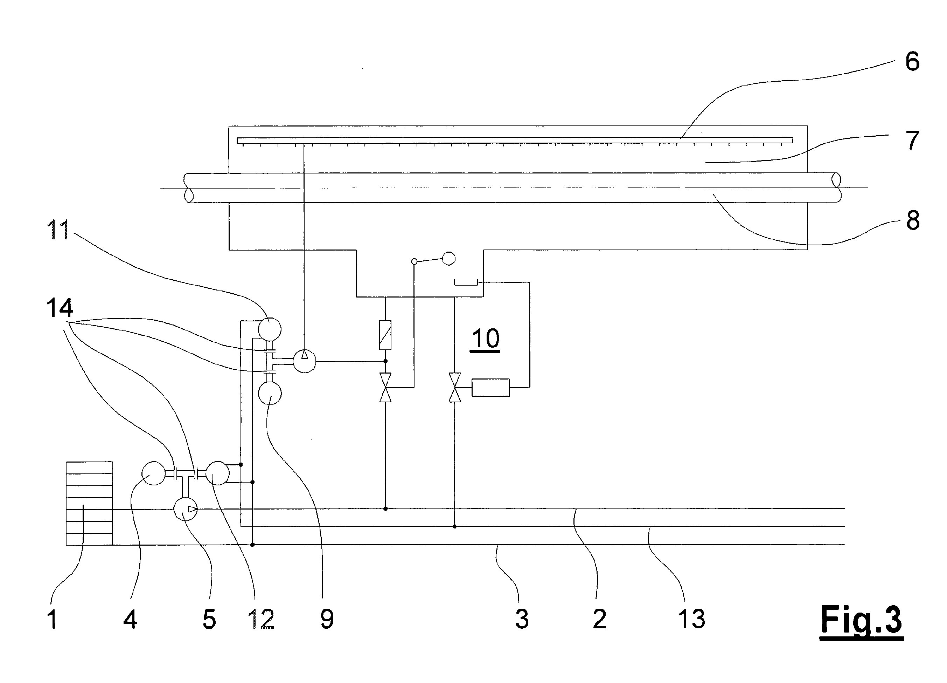

Ist noch kein warmes Wasser im Kreislauf vorhanden (z. B. Montag früh, alle Linien stehen still, dann gibt es kein warmes Abwasser, obwohl der Warmwasserkreislauf existiert), es muss aber die erste Linie angefahren werden, kommen Systeme wie in Figur 3 dargestellt zum Einsatz.

Die Pumpen dieser Linie sind mit Elektromotoren ausgestattet und wenn die Linie lange genug läuft und ausreichend warmes Abwasser vorhanden ist kann auf die Wärmekraftmaschinen umgeschaltet werden. Der Antrieb der Pumpen ist also sowohl über die Elektromotore 9 bzw. 4 als auch über die Wärmekraftmaschinen 11 und 12 möglich. Entsprechende Kupplungen 14 regeln die Energiezufuhr zu den Pumpen. Über eine derartige Gestaltung ist es somit möglich, den Kreislauf zunächst über die Elektromotore 9 und 4 anzufahren und bei vorherrschender ausreichender Temperatur im Warmwasserkreislauf dann die Wärmekraftmaschinen 11 und 12 anzufahren und schließlich den Antrieb der Pumpen von den Elektromotoren auf die Wärmekraftmaschinen umzuschalten.

Durch diese erfindungsgemäße Ausgestaltung ist es möglich, in einem Energiekreislauf die Strom verbrauchenden Geräte zu reduzieren und sogar in Gänze zu ersetzen.

### Bezugszeichenliste:

- 1: Kühlturm
- 2: Hallenvorlauf
- 3: Hallenrücklauf
- 4: Elektromotor
- 5: Pumpe
- 6: Verteilerrohr mit Sprühdüsen
- 7: Kühlbad
- 8: Kunststoffrohr
- 9: Elektromotor
- 10: Thermostatventil
- 11: Wärmekraftmaschine 1
- 12: Wärmekraftmaschine 2
- 13: Warmwasserkreislaufleitung
- 14: Kupplung

## Patentansprüche

1. Verfahren zur Energieeinsparung in einer Extrusionslinie, die mindestens einen Extruder, ein Extrusionswerkzeug, eine Kühlstrecke und einen Abzug umfasst,
wobei zur Erzeugung eines Profils (8) mindestens im Extruder zur Plastifizierung Energie in Form von Wärme in einen Kunststoff eingebracht wird und
nach einem Formgebungsprozess dem Profil (8) mindestens in der Kühlstrecke zum Erreichen der Formstabilität diesem die Wärme wieder entzogen wird,
**dadurch gekennzeichnet, dass**
mindestens ein Teil der entzogenen Wärme in mechanische Energie umgewandelt und dem Extrusionsprozess wieder zugeführt wird,
wobei die mindestens in der Kühlstrecke entzogenen Wärme über einen Wasserkreislauf (13) einer Wärmekraftmaschine (11, 12) zugeführt wird und die Wärmekraftmaschine (11, 12) eine Pumpe antreibt.

2. Verfahren nach Anspruch 1, **dadurch gekennzeichnet, dass** die mechanische Energie zum Betreiben der im Extrusionsprozess eingebundenen Umwälzpumpen und/oder Ventilatoren und/oder Gebläse und/oder Vakuumpumpen genutzt wird.

3. Verfahren nach Anspruch 1, **dadurch gekennzeichnet, dass** gewonnene mechanische Energie in elektrische Energie umgewandelt wird.

4. Verfahren nach Anspruch 3, **dadurch gekennzeichnet, dass** die elektrische Energie in ein Energienetz zurückgespeist wird.

5. Vorrichtung zur Energieeinsparung in einer Extrusionslinie, die mindestens einen Extruder, ein Extrusionswerkzeug, eine Kühlstrecke und einen Abzug umfasst,
**dadurch gekennzeichnet, dass**
mindestens der Kühlstrecke eine Wärmekraftmaschine (11) zugeordnet ist, mittels der dem Prozess entzogene Wärmemenge in mechanische Energie umwandelbar ist und
die Wärmekraftmaschine (11, 12) mindestes eine Pumpe antreibt.

6. Vorrichtung nach Anspruch 5, **dadurch gekennzeichnet, dass** die Wärmekraftmaschine (11) ein Stirlingmotor ist.

7. Vorrichtung nach Anspruch 5 oder 6, **dadurch gekennzeichnet, dass** mindestens einer der Antriebe der im Extrusionsprozess eingebundenen Umwälzpumpen und/oder Ventilatoren und/oder Gebläse und/oder Vakuumpumpen ein Stirlingmotor ist.

## Claims

1. Method for saving energy in an extrusion line which comprises at least one extruder, an extrusion die, a cooling section and a take-off unit,
wherein energy in the form of heat is introduced into a plastic at least in the extruder for plasticization in order to produce a profile (8), and
after a shaping process, heat is extracted again from the profile (8) at least in the cooling section in order to achieve dimensional stability,
**characterized in that**
at least some of the extracted heat is converted into mechanical energy and fed back to the extrusion process,
wherein the heat extracted at least in the cooling section is fed via a water circuit (13) to a heat engine (11, 12) and the heat engine (11, 12) drives a pump.

2. Method according to Claim 1, **characterized in that** the mechanical energy is used for operating the circulating pumps and/or fans and/or blowers and/or vacuum pumps incorporated in the extrusion process.

3. Method according to Claim 1, **characterized in that** mechanical energy generated is converted into electrical energy.

4. Method according to Claim 3, **characterized in that** the electrical energy is fed back into an energy network.

5. Apparatus for saving energy in an extrusion line which comprises at least one extruder, an extrusion die, a cooling section and a take-off unit,
**characterized in that**
a heat engine (11) is assigned to at least the cooling section, by means of which heat engine (11) a quantity of heat extracted from the process can be converted into mechanical energy and the heat engine (11, 12) drives at least one pump.

6. Apparatus according to Claim 5, **characterized in that** the heat engine (11) is a Stirling engine.

7. Apparatus according to Claim 5 or 6, **characterized in that** at least one of the drives of the circulating pumps and/or fans and/or blowers and/or vacuum pumps incorporated in the extrusion process is a Stirling engine.

## Revendications

1. Procédé pour économiser de l'énergie dans une ligne d'extrusion, qui comprend au moins une extrudeuse, un outil d'extrusion, une section de refroidissement et une extraction,
de l'énergie sous forme de chaleur étant introduite dans un plastique pour la production d'un profilé (8) au moins dans l'extrudeuse en vue de la plastification et
après un processus de façonnage, la chaleur étant à nouveau extraite du profilé (8) au moins dans la section de refroidissement afin d'atteindre la stabilité de forme,
**caractérisé en ce**
**qu'**au moins une partie de la chaleur extraite est convertie en énergie mécanique et est à nouveau acheminée au processus d'extrusion,
la chaleur extraite au moins dans la section de refroidissement étant acheminée par le biais d'un circuit d'eau (13) à une machine thermodynamique (11, 12) et la machine thermodynamique (11, 12) entraînant une pompe.

2. Procédé selon la revendication 1, **caractérisé en ce que** l'énergie mécanique est utilisée pour faire fonctionner les pompes de circulation et/ou les ventilateurs et/ou les soufflantes et/ou les pompes à vide dans le processus d'extrusion.

3. Procédé selon la revendication 1, **caractérisé en ce que** l'énergie mécanique obtenue est convertie en énergie électrique.

4. Procédé selon la revendication 3, **caractérisé en ce que** l'énergie électrique est réintroduite dans un réseau énergétique.

5. Dispositif pour économiser de l'énergie dans une ligne d'extrusion, qui comprend au moins une extrudeuse, un outil d'extrusion, une section de refroidissement et une extraction,
**caractérisé en ce que**
l'on associe à au moins la section de refroidissement une machine thermodynamique (11) au moyen de laquelle la quantité d'énergie extraite du processus peut être convertie en énergie mécanique et
**en ce que** la machine thermodynamique (11, 12) entraîne au moins une pompe.

6. Dispositif selon la revendication 5, **caractérisé en ce que** la machine thermodynamique (11) est un moteur Stirling.

7. Dispositif selon la revendication 5 ou 6, **caractérisé en ce qu'**au moins l'un des entraînements des pompes de circulation et/ou des ventilateurs et/ou des soufflantes et/ou des pompes à vide intervenant dans le processus d'extrusion est un moteur Stirling.
